# EUROPEAN PATENT APPLICATION

(11) **EP 3 147 813 A1**
(43) Date of publication of application: **29.03.2017**
(21) Application number: 14892396.4
(22) Date of filing: 17.10.2014
(51) Int. Cl.: G06K 7/10

(54) **REFLECTION-TYPE PASSIVE OPTICAL TAG, OPTICAL READ/WRITE DEVICE AND INTELLIGENT OPTICAL DISTRIBUTION NETWORK**

(30) Priority: 23.05.2014 CN 201410223570
(71) Applicant: ZTE Corporation, Shenzhen, Guangdong 518057 (CN)
(72) Inventor: XU, Jidong, Shenzhen Guangdong 518057 (CN); LU, Jianxin, Shenzhen Guangdong 518057 (CN)
(74) Representative: Awapatent AB
(86) International application number: PCT/CN2014/088864
(87) International publication number: WO 2015/176478

(57) **Abstract**

The present invention discloses a reflection-type passive optical tag, an optical read-write device and an intelligent optical distribution network, herein the passive optical tag includes: an optical receiver, an optical reflector, a chip, and a photovoltaic cell, herein the optical receiver is connected to the chip and is configured to receive an optical signal, convert the optical signal into an electrical signal, and send the electrical signal to the chip; the chip is configured to process the electrical signal, store tag information, and control the optical reflector to reflect or absorb continuous light sent by the optical read-write device to send a signal to the optical read-write device; the optical reflector is connected to the chip and is configured to reflect or absorb the continuous light under the control of the chip; and the photovoltaic cell is configured to convert light energy into electrical energy, store the electrical energy, and provide the electrical energy to the optical receiver, the optical reflector and the chip. With the present invention, a contactless-type passive optical tag is implemented.

## Description

### Technical Field

The present invention relates to the field of communications, in particular to a reflection-type passive optical tag, an optical read-write device and an intelligent optical distribution network.

### Background of the Related Art

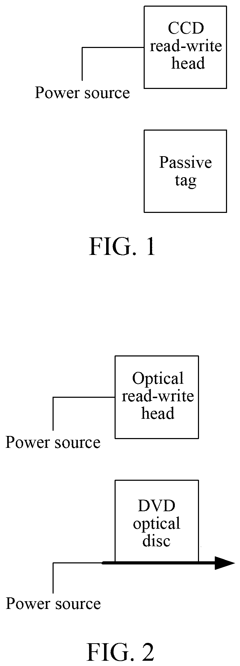

In the modem society, various production technologies are increasingly mature and products are very rich. In order to accelerate the circulation of the products and guarantee the quality traceability of the products, e.g., in order to trace all links of food to guarantee food safety, the products need to be packaged and tagged, optical tags are of a common type, e.g., barcodes or two-dimensional codes are contactless-type passive optical tags, as illustrated in FIG. 1, this type of tags cannot be modified once the tags are generated, and an optical read-write device reads the tags through laser scanning or Charged-Coupled Device (CCD) scanning, e.g." a supermarket cashier scans commodity barcodes to settle price, and a mobile phone scans two-dimensional codes to connect corresponding websites.

The modem society is also an information society, various information is stored and transmitted in the form of multimedia, especially video media have been turned from the traditional magnetic videotapes to Digital Versatile Discs (DVD), this technology bums concave and convex points on compact discs, a corresponding laser optical read-write device reads data 0 and 1 corresponding to reflectivity of these points, as illustrated in FIG. 2, and simultaneously the compact disc rotates relative to the optical read-write device such that the optical read-write device can read the data of the entire optical disc, here, the optical disc is passive and the information may be read only when movement is needed. Therefore, the technology of optical tags has already been applied to all aspects of the modem society.

At the same time, the high requirement for the modem society on information transmission enables an optical fiber network to become a main communication network. There are a great amount of optical fibers and connecting points in the entire optical fiber network, and how to distinguish these optical fibers and connection conditions thereof becomes a time-consuming and labor-consuming thing for operators. In order to improve the working efficiency and reduce the working intensity, an intelligent tag is added to each optical connecting point, then the intelligent tags are automatically read by the optical read-write device and relevant data are reported to a network manager, such that optical fiber connecting point detection automation gradually becomes a consensus and a visible and manageable optical fiber network is realized.

At present, the tag technology mainly adopted by the intelligent optical distribution network is a contact-type tag technology, typically, 1-Wire interfaces or Electrically Erasable Programmable Read-Only Memory EEPROM interfaces, which is called EEPROM for short needs to supply power to tags. The contact-type tag technology has higher requirements on the design and reliability of tag structures, and is not flexible enough in some reconstruction scenarios due to physical connection. In view of this, it is needed to find other tag read-write technologies which not only can maintain contactless-type read-write of tags but also can satisfy requirements on optical nodes of dense optical fiber connectors.

### Summary of the Invention

Aiming at the problems that the structure of contact-type tags in the related art is complex, the connection is not flexible and interfere between contactless-type tags in a dense scenario, the present invention provides a reflection-type passive optical tag, an optical read-write device and an intelligent optical distribution network to at least solve the above problems.

According to one aspect of the present invention, the present invention provides a passive optical tag, including: an optical receiver, an optical reflector, a chip and a photovoltaic cell, herein, the optical receiver is connected to the chip and is configured to receive an optical signal, convert the optical signal into an electrical signal, and send the electrical signal to the chip; the chip is configured to process the electrical signal, store tag information and control the optical reflector to reflect or absorb continuous light sent by an optical read-write device to send a signal to the optical read-write device; the optical reflector is connected to the chip and is configured to reflect or absorb the continuous light under the control of the chip; and the photovoltaic cell is configured to convert light energy into electrical energy, store the electrical energy, and provide the electrical energy to the optical receiver, the optical reflector and the chip.

Alternatively, the photovoltaic cell is configured to receive the light energy from the optical read-write device and/or receive the light energy from other light source.

Alternatively, the optical reflector includes: a Liquid Crystal Display, LCD.

Alternatively, the passive optical tag is a planar structure and the optical reflector is located at a center of the planar structure.

According to another aspect of the present invention, the present invention provides a passive optical tag, including: an optical reflector, a chip and a photovoltaic cell receiver, herein, the photovoltaic cell receiver is connected to the chip and is configured to convert light energy into electrical energy and provide the electrical energy to the chip and the optical reflector; and receive an optical signal, convert the optical signal into an electrical signal and send the electrical signal to the chip; the chip is configured to process the electrical signal; store tag information; and control the optical reflector to reflect or absorb the continuous light, to send a signal to the optical read-write device; and the optical reflector is connected to the chip and is configured to reflect or absorb the continuous light under control of the chip.

Alternatively, the optical reflector includes: an LCD.

Alternatively, the passive optical tag is a planar structure and the optical reflector is located at a center of the planar structure.

According to another aspect of the present invention, the present invention provides an optical read-write device, including: an optical receiver, an optical transmitter and a chip, herein, the optical receiver is connected to the chip and is configured to receive an optical signal sent by a passive optical tag by reflecting or absorbing light, convert the optical signal into an electrical signal, and send the electrical signal to the chip; the chip is configured to process the electrical signal; perform a read-write operation on the optical tag; and control the optical transmitter to send continuous light; and the optical transmitter is connected to the chip and is configured to send the continuous light under the control of the chip, modulate the electrical signal sent by the chip into an optical signal and send the optical signal obtained through modulation.

Alternatively, the optical transmitter includes: a Light Emitting Diode, LED and a Laser Diode, LD.

According to another aspect of the present invention, the present invention provides a passive optical tag system, including: a passive optical tag and an optical read-write device, herein, the passive optical tag includes: a first optical receiver, an optical reflector, a first chip and a photovoltaic cell, herein the first optical receiver is connected to the first chip and is configured to receive a first optical signal, convert the first optical signal into a first electrical signal, and send the first electrical signal to the first chip; the first chip is configured to process the first electrical signal; store tag information; and control the optical reflector to reflect or absorb continuous light sent by the optical read-write device to send a signal to the optical read-write device; the optical reflector is connected to the first chip and is configured to reflect or absorb the continuous light under control of the first chip; and the photovoltaic cell is configured to convert light energy into electrical energy and provide the electrical energy to the first optical receiver, the optical reflector and the first chip; and the optical read-write device includes a second optical receiver, an optical transmitter and a second chip, herein the second optical receiver is connected to the second chip and is configured to receive a second optical signal, convert the second optical signal into a second electrical signal, and send the second electrical signal to the second chip; the second chip is configured to process the second electrical signal; perform a read-write operation to the passive optical tag; and control the optical transmitter to send the continuous light; and the optical transmitter is connected to the second chip and is configured to send the continuous light under the control of the second chip, modulate the electrical signal of the second chip into a third optical signal and send the third optical signal.

Alternatively, the optical transmitter includes: a Light Emitting Diode, LED and a Laser Diode, LD.

According to another aspect of the present invention, the present invention provides a passive optical tag system, including: a passive optical tag and an optical read-write device, herein, the passive optical tag includes: an optical reflector, a first chip and a photovoltaic cell receiver, herein the photovoltaic cell receiver is connected to the first chip and is configured to convert light energy into electrical energy and provide the electrical energy to the first ship and the optical reflector; and receive a first optical signal, convert the first optical signal into a first electrical signal and send the first electrical signal to the first chip; the first chip is configured to process the first electrical signal; store tag information; and control the optical reflector to reflect or absorb continuous light sent by the optical read-write device to send a signal to the optical read-write device; and the optical reflector is connected to the first chip and is configured to reflect or absorb the continuous light under the control of the first chip; and the optical read-write device includes: an optical receiver, an optical transmitter and a second chip, herein the optical receiver is connected to the second chip and is configured to receive a second optical signal, convert the second optical signal into a second electrical signal, and send the second electrical signal to the second chip; the second chip is configured to process the second electrical signal, perform a read-write operation to the passive optical tag, and control the optical transmitter to send the continuous light; and the optical transmitter is connected to the second chip and is configured to send the continuous light under the control of the second chip, modulate a third electrical signal sent by the second chip into a third optical signal and send the third optical signal.

According to another aspect of the present invention, the present invention provides an intelligent optical distribution network, including: a connection box including a plurality of connector ports; and a plurality of cables, herein each cable includes opposite ends and corresponding connectors fixed on each end, each connector is configured to be detachably fixed in the connector port, herein the above passive optical tag is set on each connector, each passive optical tag stores tag identification information of the passive optical tag; the above optical read-write device is set on each connector port, and each optical read-write device is set on a position enabling the optical read-write device to directly face to the passive optical tag on the connector when the connector is inserted into the connector port; each optical read-write device is configured to perform a read-write operation on the passive optical tag corresponding to the optical read-write device; each passive optical tag is configured to make a response to the read-write operation performed by the optical read-write device corresponding to the passive optical tag.

Alternatively, each optical read-write device is further configured to communicate with a network management system, receive a message from the network management system and/or send information to the network management system.

Alternatively, each optical read-write device is configured to make a response to a request from the network management system, perform the read-write operation on the passive optical tag corresponding to the optical read-write device.

Alternatively, the intelligent optical distribution network further includes: a management device configured to control each optical read-write device and report information reported by each optical read-write device to the network management system.

According to another aspect of the present invention, the present invention provides a read-write method of a passive optical tag, including: an optical read-write device sending a first instruction to a passive optical tag, herein the first instruction is used for enquiring a tag state ;the optical read-write device sending continuous light to the passive optical tag; and the optical read-write device receiving a first optical signal sent by the passive optical tag by reflecting or absorbing the continuous light after receiving the first instruction, herein the first optical signal carries a current state of the passive optical tag.

Alternatively, the method further includes: the optical read-write device sending a second instruction to the passive optical tag, herein the second instruction is used for enquiring identification information of the passive optical tag; the optical read-write device sending the continuous light to the passive optical tag; and the optical read-write device receiving a second optical signal sent by the passive optical tag by reflecting or absorbing the continuous light after receiving the second instruction, herein the second optical signal carries the identification information.

Alternatively, the method further includes: the optical read-write device judging whether the identification information is correct; and when the identification information is incorrect, the optical read-write device giving new identification information to the passive optical tag.

Alternatively, the method further includes: the optical read-write device judging whether the identification information is blank; and when the identification information is blank, the optical read-write device giving new identification information to the passive optical tag.

Alternatively, the method further includes: the optical read-write device sending a third instruction to the passive optical tag, herein the third instruction is used for giving the identification information to the passive optical tag.

Alternatively, the method further includes: the optical read-write device sending a fourth instruction to the passive optical tag, herein the fourth instruction is used for indicating to end communication; the optical read-write device sending the continuous light to the passive optical tag; and the optical read-write device receiving a fourth optical signal sent by the passive optical tag by reflecting or absorbing the continuous light after receiving the fourth instruction, herein the fourth optical signal carries information agreeing to end.

According to another aspect of the present invention, the present invention provides a read-write device of a passive optical tag, including: a first sending module configured to send a first instruction to the passive optical tag, herein the first instruction is used for enquiring a tag state; a sending module configured to send continuous light to the passive optical tag; and a first receiving module configured to receive a first optical signal sent by the passive optical tag by reflecting or absorbing the continuous light after receiving the first instruction, herein the first optical signal carries a current state of the passive optical tag.

Alternatively, the device further includes: a second sending module configured to send a second instruction to the passive optical tag, herein the second instruction is used for enquiring identification information of the passive optical tag; the sending module further configured to send the continuous light to the passive optical tag after the second sending module sends the second instruction; and a second receiving module configured to receive a second optical signal sent by the passive optical tag by reflecting or absorbing the continuous light after receiving the second instruction, herein the second optical signal carries the identification information.

Alternatively, the device further includes: a first judgment module configured to judge whether the identification information is correct; and a first giving module configured to, when the identification information is incorrect, give new identification information to the passive optical tag.

Alternatively, the device further includes: a second judgment module configured to judge whether the identification information is blank; and a second giving module configured to, when the identification information is blank, give new identification information to the passive optical tag.

Alternatively, the device further includes: a third sending module configured to send a third instruction to the passive optical tag, herein the third instruction is used for giving the identification information to the passive optical tag.

Alternatively, the device further includes: a fourth sending module configured to send a fourth instruction to the passive optical tag, herein the fourth instruction is used for indicating to end communication; the sending module further configured to send the continuous light to the passive optical tag after the fourth sending module sends the fourth instruction; and a fourth receiving module configured to receive a fourth optical signal sent by the passive optical tag by reflecting or absorbing the continuous light after receiving the fourth instruction, herein the fourth optical signal carries information agreeing to end.

Through the present invention, the passive optical tag is implemented, no power source needs to be connected, storage and reading of tag information are performed in a contactless way, the size is small, the passive optical tag is applicable to the application scenario of dense optical connectors and the tag information can be modified.

### Brief Description of Drawings

The drawings described here are used for providing further understanding about the present invention and constitute a part of the present application. The exemplary embodiments of the present invention and the description thereof are used for explaining the present invention instead of improperly limiting the present invention. In the drawings:
FIG. 1 illustrates a schematic diagram of an optical tag technology according to the related art;
FIG. 2 illustrates a schematic diagram of a DVD tag technology according to the related art;
FIG.3 illustrates a structural diagram of a passive optical tag according to the embodiment of the present invention;
FIG.4 illustrates a structural diagram of a preferred passive optical tag according to the embodiment of the present invention;
FIG.5 illustrates a structural diagram of an optical read-write device according to the embodiment of the present invention;
FIG.6 illustrates a schematic diagram of an optical frequency identification system according to the embodiment of the present invention;
FIG.7 illustrates a flowchart of a read-write method of a passive optical tag according to the embodiment of the present invention;
FIG.8 illustrates a structural diagram of a read-write device of an optical read-write device according to the embodiment of the present invention;
FIG. 9 illustrates a schematic diagram 1 of preferred optical tag reading/writing according to the embodiment of the present invention.
FIG. 10 illustrates a schematic diagram 2 of preferred optical tag reading/writing according to the embodiment of the present invention.

### Preferred Embodiments of the Invention

The present invention will be described in details with reference to the drawings in combination with the embodiments. It needs to be stated that the embodiments in the present application and the features in the embodiments may be mutually combined under the situation of no conflict.

The embodiment of the present invention provides an Optical Frequency Identification contactless-type(OFID) technology, which includes a passive optical tag and an optical read-write device and can well solve the problem met by RFID in an intelligent ODN, but the embodiment of the present invention is not limited thereto.

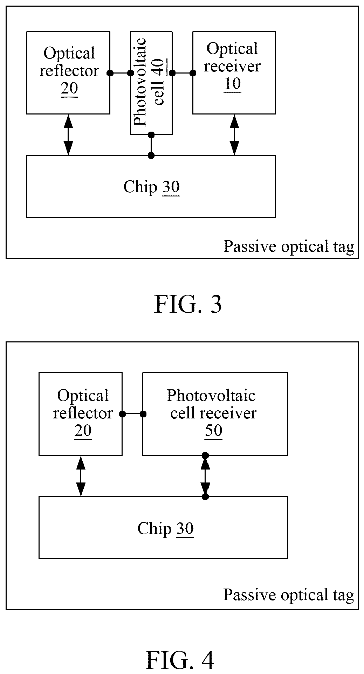

FIG. 3 illustrates a structural diagram of a passive optical tag according to the embodiment of the present invention. As illustrated in FIG. 3, the passive optical tag includes: an optical receiver 10, an optical reflector 20, a chip 30 and a photovoltaic cell 40, herein the optical receiver 10 is connected to the chip 30 and is configured to receive an optical signal, convert the optical signal into an electrical signal, and send the electrical signal to the chip 30;the chip 30 is configured to process the electrical signal; store tag information; and control the optical reflector 20 to reflect or absorb continuous light sent by an optical read-write device; the optical reflector 20 is connected to the chip 30 and is configured to reflect or absorb the continuous light sent by the optical read-write device under the control of the chip 30; and the photovoltaic cell 40 is configured to convert light energy into electrical energy, store the electrical energy, and provide the electrical energy to the optical receiver 10, the optical reflector 20 and the chip 30.

Through the embodiment of the present invention, a reflection-type passive optical tag is implemented.

In the embodiment of the present invention, the tag information may include but not limited to: tag identification information and position information.

In one implementation mode of the embodiment of the present invention, the photovoltaic cell 40 may have dual functions, which can convert an optical signal into an electrical signal in addition to converting light energy into electrical energy, and has a function of replacing the optical receiver 10. In actual application, the photovoltaic cell 40 and the optical receiver 10 may be combined into one device. As illustrated in FIG. 4, this device is a photovoltaic cell receiver 50.

In one implementation mode of the embodiment of the present invention, the photovoltaic cell 40 may be configured to receive light energy from the outside of the passive optical tag. External light energy may be visible light or infrared light, or a light signal sent by the tag read-write device.

In one implementation mode of the embodiment of the present invention, the passive optical tag may further include: a memory configured to store information; a chip 30 further configured to write information to the memory and/or read information from the memory.

In the embodiment of the present invention, the chip 30 may be configured to receive a read instruction from the optical read-write device through the optical receiver 10, read the stored information and controls the optical reflector 20 to reflect or absorb the continuous light sent by the optical read-write device to send the information to the tag read device. Of course, the chip 30 may further receive a write operation of the optical read-write device, perform the write operation and store information written into.

In the embodiment of the present invention, the optical receiver 10 transmits the received data signal to the chip 30, and the chip 30 processes the data and then controls the optical reflector 20 according to the requirement to reflect or absorb the continuous light sent by the optical read-write device to send a reply signal to the optical read-write device.

In one implementation mode of the embodiment of the present invention, the optical reflector 20 may include an LCD, etc. The optical receiver 10 may include a photon receiver, etc.

In one implementation mode of the embodiment of the present invention, the passive optical tag is a planar structure and the optical reflector 20 is located at a center of the planar structure. Through the preferred implementation mode, the optical reflector 20 is facilitated to reflect or absorb the continuous light of the optical read-write device.

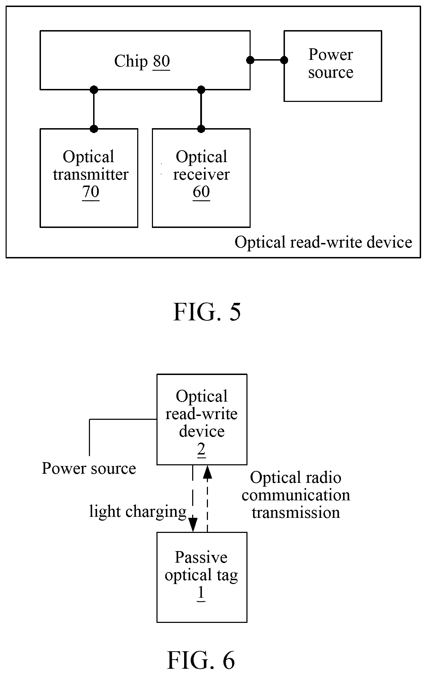

FIG. 5 illustrates a structural diagram of an optical read-write device according to the embodiment of the present invention. As illustrated in FIG. 5, the device includes: an optical receiver 60, an optical transmitter 70 and a chip 80, herein the optical receiver 60 is connected to the chip 80 and is configured to receive an optical signal sent by an optical tag by reflecting or absorbing continuous light, convert the optical signal into an electrical signal, and send the electrical signal to the chip 80;the optical transmitter 70 is connected to the chip 80 and is configured to send the continuous light under the control of the chip 80, convert the electrical signal into an optical signal and send the optical signal; and the chip 80 is configured to process the electrical signal; perform a read-write operation to the optical tag; control the optical transmitter 70 to send continuous light; and store and compare tag information.

In the embodiment of the present invention, after the optical transmitter 70 sends the signal to the optical tag, the optical transmitter 70 sends continuous light to the optical tag.

In one implementation mode of the embodiment of the present invention, the optical read-write device further includes: a communication device configured to communicate with other devices.

When the read-write operation is performed to the optical tag, the chip 80 may send a read-write instruction through the optical transmitter 70 and receive information sent by the optical tag through the optical receiver 60.

In the embodiment of the present invention, the optical read-write device may be an active device, may send light through the optical transmitter 70 to charge the passive optical tag and may also send pulse light to the passive optical tag to transmit a corresponding data signal, the optical receiver 60 thereof receives the data signal sent by the passive optical tag, and the chip 80 processes the data signal, simultaneously controls the working state of the optical transmitter 80 and sends corresponding information to the passive optical tag.

In the embodiment of the present invention, the optical transmitter 70 may include: and LED, an LD, etc.

FIG. 6 illustrates a schematic diagram of an optical frequency identification system according to the embodiment of the present invention. As illustrated in FIG. 6, the system includes: a passive optical tag 1 and an optical read-write device 2, herein the passive optical tag land the optical read-write device 2 are as described above in the embodiment of the present invention and thus are not repetitively described here.

The optical read-write device 2 may send a corresponding instruction to the passive optical tag 1, the passive optical tag 1 receives the instruction and then sends a corresponding reply through the optical transmitter thereof, the optical read-write device receives the reply and then processes the reply, and if the information is enough, the passive optical tag is informed about reception and the process is ended; and if the information is insufficient, the optical read-write device sends an enquiry instruction again, and the passive optical tag makes a reply again according to the requirement until the optical read-write device feels satisfied. The optical read-write device and the passive optical tag do not contact each other, but the distance therebetween is very short and is generally limited within a very short distance, and data transmission therebetween is performed through an optical radio communication point-to-point (P2P) technology.

A communication process between the optical read-write device and the passive optical tag may include the following steps: firstly the optical read-write device sends an enquiry instruction and the passive optical tag makes a reply about the current state thereof according to the instruction, e.g., some working parameters such as blank identification or existing identification information; then the optical read-write device sends a corresponding instruction according to the state of the optical tag, e.g., if the identification of the passive optical tag is blank, the optical read-write device gives identification information to the passive optical tag; and if the passive optical tag has already had identification information, the optical read-write device may require the passive optical tag to feed back; the optical read-write device may perform an evaluation according to the feedback information, if the information is not correct, the optical read-write device gives new identification information to the passive optical tag, and the passive optical tag feeds back the information after execution is completed; and the optical read-write device evaluates the information again, if the information is completely correct, the optical read-write device sends an ending instruction, simultaneously the passive optical tag makes a reply upon reception and the process is ended.

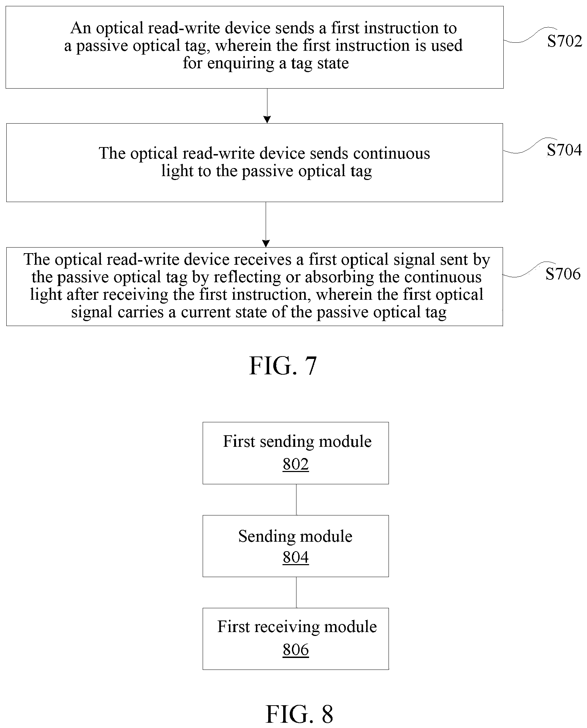

FIG. 7 illustrates a flowchart of a read-write method of a passive optical tag according to the embodiment of the present invention. As illustrated in FIG. 7, the method includes steps S702-S706.

In step S702, an optical read-write device sends a first instruction to a passive optical tag, herein the first instruction is used for enquiring a tag state.

In step S704, the optical read-write device sends continuous light to the passive optical tag.

In step S706, the optical read-write device receives a first optical signal sent by the passive optical tag by reflecting or absorbing the continuous light after receiving the first instruction, herein the first optical signal carries a current state of the passive optical tag.

In one implementation mode of the embodiment of the present invention, the optical read-write device may send a second instruction to the passive optical tag, herein the second instruction is used for enquiring identification information of the passive optical tag. After the optical read-write device sends the second instruction, the optical read-write device sends the continuous light to the passive optical tag. The optical read-write device receives a second optical signal sent by the passive optical tag by reflecting or absorbing the continuous light after receiving the second instruction, herein the second optical signal carries the identification information.

Further, the optical read-write device may judge whether the received identification information is correct; and if the identification information is incorrect, the optical read-write device may give new identification information to the passive optical tag.

Further, the optical read-write device may judge whether the identification information is blank; and if the identification information is blank, the optical read-write device may give new identification information to the passive optical tag.

In one implementation mode of the embodiment of the present invention, the optical read-write device may send a third instruction to the passive optical tag, herein the third instruction is used for giving the identification information to the passive optical tag.

In one implementation mode of the embodiment of the present invention, the optical read-write device may send a fourth instruction to the passive optical tag, herein the fourth instruction is used for instructing to end communication; after the fourth instruction is sent, the optical read-write device may send the continuous light to the passive optical tag; and the optical read-write device receives a fourth optical signal sent by the passive optical tag by reflecting or absorbing the continuous light after receiving the fourth instruction, herein the fourth optical signal carries information agreeing to end.

FIG. 8 illustrates a structural diagram of a read-write device of an optical read-write device according to the embodiment of the present invention. As illustrated in FIG. 8, the read-write device includes: a first sending module 802 configured to send a first instruction to a passive optical tag, herein the first instruction is used for enquiring a tag state; a sending module 804 configured to send continuous light to the passive optical tag; and a first receiving module 806 configured to receive a first optical signal sent by the passive optical tag by reflecting or absorbing the continuous light after receiving the first instruction, herein the first optical signal carries a current state of the passive optical tag.

In one implementation mode of the embodiment of the present invention, the device further includes: a second sending module configured to send a second instruction to the passive optical tag, herein the second instruction is used for enquiring identification information of the passive optical tag; and a second receiving module configured to receive a second optical signal sent by the passive optical tag by reflecting or absorbing the continuous light after receiving the second instruction, herein the second optical signal carries the identification information. The sending module 804 is further configured to send the continuous light to the passive optical tag after the second instruction is sent.

Further, the above device may further include: a first judgment module configured to judge whether the identification information is correct; and a first giving module configured to, when the identification information is incorrect, give new identification information to the passive optical tag.

Further, the above device may further include: a second judgment module configured to judge whether the identification information is blank; and a second giving module configured to, when the identification information is blank, give new identification information to the passive optical tag.

In one implementation mode of the embodiment of the present invention, the device further includes: a third sending module configured to send a third instruction to the passive optical tag, herein the third instruction is used for giving identification information to the passive optical tag.

In one implementation mode of the embodiment of the present invention, the device further includes: a fourth sending module configured to send a fourth instruction to the passive optical tag, herein the fourth instruction is used for instructing to end communication; and a fourth receiving module configured to receive a fourth optical signal sent by the passive optical tag by reflecting or absorbing the continuous light after receiving the fourth instruction, herein the fourth optical signal carries information agreeing to end. The sending module 804 is further configured to send the continuous light to the passive optical tag after the fourth instruction is sent.

The passive optical tag and the optical read-write device of the embodiments of the present invention may be applied to various scenarios. In the embodiments of the present invention, description is made by taking application in a telecommunication wiring system as an example.

The above system of the embodiment of the present invention is alternatively applied to an optical fiber network. The embodiment of the present invention will be described below by taking the optical fiber network as an example.

In the embodiment of the present invention, an intelligent optical distribution network may include: a connection box including a plurality of connector ports; and a plurality of cables, herein each cable includes opposite ends and corresponding connectors fixed on each end, each connector is configured to be detachably fixed in the connector port, the above passive optical tag is set on each connector, each passive optical tag stores tag identification information of the passive optical tag; an optical read-write device is set on each connector port, and each optical read-write device is set on a position enabling the optical read-write device to be directly facing to the passive optical tag on the connector when the connector is inserted into the connector port; each optical read-write device is configured to perform a read-write operation on the passive optical tag corresponding to the optical read-write device; and each passive optical tag is configured to make a response to the read-write operation performed by the optical read-write device corresponding to the passive optical tag.

Through the embodiment of the present invention, contactless-type detection is implemented by adopting the passive optical tag and there is no interference under dense scenarios.

In one implementation mode of the embodiment of the present invention, the optical read-write device is further configured to communicate with a network management system, receive a message from the network management system and/or send information to the network management system.

In one implementation mode of the embodiment of the present invention, the optical read-write device may be configured to make a response to a request from the network management system, and perform the read-write operation on the passive optical tag corresponding to the optical read-write device. Alternatively, the optical read-write device may report the read information and other related information to the network management system.

In one implementation mode of the embodiment of the present invention, the intelligent optical distribution network may further include: a management device configured to control each optical read-write device and report information reported by each optical read-write device to the network management system.

The preferred implementation modes of the embodiments of the present invention will be described below.

### Preferred embodiment 1

This embodiment of the present invention provides a contactless-type passive optical tag method which uses a photovoltaic cell technology to charge a passive optical tag, and a method and a device for reading and identifying the passive optical tag by adopting an optical radio technology. The method satisfies technical requirements of tag passiveness and contactless-type read-write intelligent optical distribution network tags.

An overall technical solution of the embodiment of the present invention is illustrated in FIG. 6 and is implemented through the following specific mode:
The solution consists of an optical read-write device (equivalent to the above-mentioned optical read-write device) and a contactless-type passive optical tag (equivalent to the above-mentioned passive optical tag), specifically as illustrated in FIG. 6.

The optical read-write device consists of an optical transmitter, an optical receiver, a chip, etc., and a basic structure is as illustrated in FIG. 5. The optical read-write device which is an active equipment, may send light through the optical transmitter to charge the passive optical tag and may also send pulse light to the passive optical tag to transmit a corresponding data signal, the optical receiver thereof receives the data signal sent by the passive optical tag, and the chip processes the data signal and simultaneously controls an optical reflector to modulate the light sent by the optical read-write device and reflect the corresponding information to the optical read-write device.

The passive optical tag consists of a photovoltaic cell, an optical reflector, an optical receiver and a chip, and a basic structure is as illustrated in FIG. 3 and FIG. 4, firstly, the photovoltaic cell converts the received light into power which is supplied to other several units, the optical receiver transmits the received data signal to the chip, and the chip processes the data and then starts the optical reflector according to the requirement to modulate a reply signal on the light of the optical read-write device and reflect the light to the optical read-write device.

Since the passive optical tag is passive, firstly the optical read-write device emits light to charge the passive optical tag or the passive optical tag is charged through an external light source, then the optical read-write device sends a corresponding instruction to the passive optical tag, and the light of the optical read-write device is restored to a state when the passive optical tag is charged, i.e., a state of continuous light is kept; after the passive optical tag receives the instruction, the chip performs processing, then a corresponding reply is modulated on the light of the optical read-write device through the optical reflector, the light is reflected back to the optical read-write device, the optical read-write device receives the reply and then processes the reply, if the information is enough, the passive optical tag is informed about reception and the process is ended; and if the information is insufficient, the optical read-write device sends an enquiry instruction again, and the passive optical tag sends a reply again according to the requirement until the optical read-write device feels satisfied. The optical read-write device and the passive optical tag do not contact each other, but the distance therebetween is very short and is generally limited within a very short distance, the distance may be limited within 1cm for application in the intelligent ODN, and data transmission therebetween is performed through an optical radio communication point-to-point (P2P) technology.

A basic flowchart of communication between the optical read-write device and the passive optical tag is as illustrated in FIG. 7. Firstly the optical read-write device sends an enquiry instruction and the passive optical tag makes a reply about the current state thereof according to the instruction, e.g., some working parameters such as blank identification or existing identification information. Then the optical read-write device sends a corresponding requirement, e.g., if the identification of the passive optical tag is blank, the optical read-write device gives new identification information to the passive optical tag; and if the passive optical tag has already had identification information, the optical read-write device may require the passive optical tag to feed back. The optical read-write device may perform an evaluation according to the feedback information, if the information is incorrect, the optical read-write device gives new identification information to the passive optical tag, and the passive optical tag feeds back the information after execution is completed. The optical read-write device evaluates the information again, if the information is completely correct, the optical read-write device sends an ending instruction, simultaneously the passive optical tag makes a reply upon reception and the process is ended.

### Preferred embodiment 2

The core of this embodiment of the present invention is a passive and contactless-type passive optical tag and a tag read-write system consisting of the passive and contactless-type optical tag and an optical read-write device, the passive optical tag is charged through the optical read-write device or a peripheral light source, then the tag is read/written through a half-duplex communication mode of sending through the optical read-write device and reflection through the passive optical tag, and moreover, the passive optical tag has functions of edibility and reusability.

Refer to the overall technical solution diagram of the embodiment of the present invention illustrated in FIG. 6, reading and writing tag information by using this method is initiated by a control chip in the optical read-write device, the passive optical tag mainly stores identification and position information, these information is given by the optical read-write device and may also be modified through the optical read-write device, the power for the working of the passive optical tag comes from the photovoltaic cell through light conversion, and the passive optical tag may be charged through the optical read-write device and may also be charged through an external light source.

Refer to the diagram of function components of the optical read-write device of the method of the present invention illustrated in FIG. 5, the optical read-write device is an active equipment and includes an optical transmitter, an optical receiver and a control processing chip. Herein, the optical transmitter plays a role of charging the passive optical tag and sending a data signal to the passive optical tag, and simultaneously the light is reflected by the passive optical tag to transmit the information of the passive optical tag to the optical read-write device; the optical receiver plays a role of receiving the optical signal sent by the passive optical tag; and finally the control processing chip may receive an instruction from an external network manager to start reading/ and writing the passive optical tag, for blank passive optical tag, identification and position information may be given thereto, the tag which has already had the identification information may also be read and compared, the corresponding information of the tag may also be modified and finally the optical read-write device transmits the related information to the network manager or a control center for saving.

Refer to the diagram of function components of the passive optical tag illustrated in FIG. 3, the passive optical tag is passive and consists of four function units, i.e., a photovoltaic cell, an optical reflector, an optical receiver and a chip. Herein, the optical reflector does not emit light itself but absorbs and reflects incident light to send the signal out, and for a typical example, the optical reflector is a Liquid Crystal Display(LCD); the photovoltaic cell receives light of the optical read-write device or another external light source and converts the light into power for use by other several units, and the optical reflector modulates the information of the passive optical tag on the incident light of the optical read-write device according to the requirement of the control chip and then reflects the light back to the optical read-write device; the optical receiver converts the instruction received from the optical read-write device into an electrical signal which is sent to the chip; and the chip processes the instruction, starts the optical reflector to make a reply and simultaneously has a function of storing information.

Refer to the diagram of function components of the passive optical tag illustrated in FIG. 4, the passive optical tag is passive and consists of three function units, i.e., a photovoltaic cell receiver, an optical reflector and a chip. FIG. 4 is another passive optical tag implementation structure diagram equivalent to FIG. 3. Herein, the optical reflector does not emit light itself but absorbs and reflects incident light to send the signal, and for a typical example, the optical reflector is an LCD; the photovoltaic cell receiver is integrated with the functions of a photovoltaic cell and an optical receiver, firstly the photovoltaic cell receiver converts light of the optical read-write device or another external light source into power used by other several units, simultaneously converts the data signal of the optical read-write device into an electrical signal of changing output voltage through and transmits the electrical signal to the chip, and the chip performs related processing to the instruction, starts the optical reflector to modulate the signal on the reflected light to make a reply and simultaneously has a function of storing information.

### Preferred embodiment 3

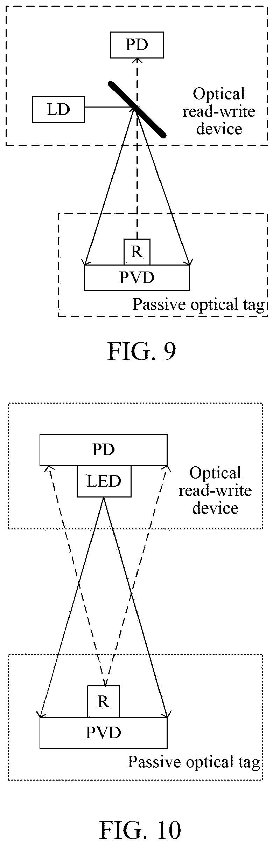

In one implementation mode of the embodiment of the present invention, as illustrated in FIG. 9, optical paths from sending and receiving portions of the optical read-write device to the passive optical tag are overlapped through a beam splitter. The passive optical tag has an LCD which forms an optical reflector which transmits data by reflecting and absorbing incident light, a Photovoltaic Cell Detector (PVD) is charged by absorbing light which irradiates the PVD and simultaneously reads information transmitted through the optical signal sent by the optical read-write device, and in order to fully and effectively improve the photoelectric conversion efficiency, the optical reflector (LCD) may be disposed at an origin and the photovoltaic cell and the optical receiver may be disposed around the optical reflector.

A working mode thereof is as follow: firstly, the optical read-write device turns on a light source to supply power to the passive optical tag, then the chip starts to modulate a signal on the light of the optical reflector to send the signal to the passive optical tag, and after the signal is sent, the optical reflector returns to the original state of continuous light to continuously supply power to the passive optical tag. After the tag receives the signal, information is transmitted to the chip, and the chip controls the optical reflector (e.g., LCD) according to the requirement to modulate a reply signal on the reflected light to send the reply signal to the optical read-write device. This half-duplex communication mode may be repeated until the optical read-write device obtains the needed or required information.

### Preferred embodiment 4

In another implementation mode of the embodiment of the present invention, as illustrated in FIG. 10, a sending portion of the optical read-write device is located on a central axis, a receiving portion is located around, this brings the advantage that no beam splitter is needed and the structure is relatively simple since one component is reduced. The passive optical tag has an LCD which forms an optical reflector which transmits data by reflecting and absorbing incident light, the photovoltaic cell detector is charged by absorbing light which irradiates the photovoltaic cell detector and simultaneously reads information transmitted by the optical read-write device, and in order to fully and effectively improve the photoelectric conversion efficiency, the optical reflector (e.g., LCD) may be disposed at an origin and the photovoltaic cell and the optical receiver may be disposed around the optical reflector.

A working mode thereof is as follow: firstly, the optical read-write device turns on a light source to supply power to the passive optical tag, then the chip starts to modulate a signal on the light of the optical reflector to send the signal to the passive optical tag, and after the signal is sent, the optical reflector returns to the original state of continuous light to continuously supply power to the passive optical tag. After the tag receives the signal, information is transmitted to the chip, and the chip controls the optical reflector (e.g., LCD) according to the requirement to modulate a reply signal on the reflected light to send the reply signal to the optical read-write device. This half-duplex communication mode may be repeated until the optical read-write device obtains the needed or required information.

The passive optical tag system may be applied to various occasions, and typically, may be applied to the intelligent optical distribution network, e.g., the passive optical tag is disposed on the optical connector, the optical read-write device is disposed above the tag, when the optical connector is inserted into the connection box, it indicates that the optical fiber has already been in a connected state, at this moment the tag is just located below the optical read-write device, and the passive optical tag may be read and written by turning on the optical read-write device; and the passive optical tag may also be disposed on a commodity, the tag stores special information including price of the commodity, a cashier scans the passive optical tag through a handheld optical read-write device or a fixed optical read-write device to settle the price of the commodity; and the passive optical tag may also be used as a transport card, and the optical read-write device is disposed on a public vehicle such as subway, bus and taxi and is used as a billing tool; of course, there are some small-scale applications, e.g., the passive optical tag may be used as a key or an employee identification card, and the optical read-write device is disposed at a door and is used for identification, etc.

From the above-mentioned description, it can be seen that the present invention realizes the following technical effects: the contactless-type reflection-type passive optical tag which is charged by using the photovoltaic cell technology and the method and the device for reading and identifying the optical tag by adopting the optical radio technology are implemented, and tag passiveness and contactless-type reading and writing are implemented.

Obviously, one skilled in the art should understand that all modules and all steps of the present invention may be implemented by using general-purpose computing devices, they may be integrated in a single computing device or distributed on a network consisting of a plurality of computing devices, optionally they may be implemented by using program codes which can execute by computing devices, thus they may be stored in memory devices and executed by computing devices, and under certain circumstances, the illustrated or described steps may be executed according to a sequence different from the sequence here, or they may be respectively manufactured into integrated circuit modules or a plurality of modules or steps thereof may be manufactured into a single integrated circuit module to implement. Therefore, the present invention is not limited to any specific combination of hardware and software.

The embodiments described above are just preferred embodiments of the present invention and are not used for limiting the present invention, for one skilled in the art, the present invention may have various modifications and variations. Any modification, equivalent replacement, improvement and the like fall within the spirit and rule of the present invention shall be still included in the protection scope of the present invention.

### Industrial Applicability

As described above, with the embodiments and the preferred implementation modes, the passive optical tag is implemented, no power source needs to be connected, storage and reading of tag information are performed in a contactless way, the size is small, the passive optical tag is applicable to the application scenario of dense optical connectors and the tag information can be modified.

## Claims

1. A passive optical tag, comprising: an optical receiver, an optical reflector, a chip and a photovoltaic cell, wherein,
the optical receiver is connected to the chip and is configured to receive an optical signal, convert the optical signal into an electrical signal, and send the electrical signal to the chip;
the chip is configured to process the electrical signal, store tag information, and control the optical reflector to reflect or absorb continuous light sent by an optical read-write device to send a signal to the optical read-write device;
the optical reflector is connected to the chip and is configured to reflect or absorb the continuous light under control of the chip; and
the photovoltaic cell is configured to convert light energy into electrical energy, store the electrical energy, and provide the electrical energy to the optical receiver, the optical reflector and the chip.

2. The passive optical tag according to claim 1, wherein the photovoltaic cell is configured to receive the light energy from the optical read-write device and/or receive the light energy from other light source.

3. The passive optical tag according to claim 1, wherein the optical reflector comprises: a Liquid Crystal Display, LCD.

4. The passive optical tag according to any one of claims 1-3, wherein the passive optical tag is a planar structure and the optical reflector is located at a center of the planar structure.

5. A passive optical tag, comprising: an optical reflector, a chip and a photovoltaic cell receiver, wherein,
the photovoltaic cell receiver is connected to the chip and is configured to convert light energy into electrical energy, provide the electrical energy to the chip and the optical reflector, and receive an optical signal, convert the optical signal into an electrical signal and send the electrical signal to the chip;
the chip is configured to process the electrical signal; store tag information, and control the optical reflector to reflect or absorb continuous light sent by an optical read-write device to send a signal to the optical read-write device; and
the optical reflector is connected to the chip and is configured to reflect or absorb the continuous light under control of the chip.

6. The passive optical tag according to claim 5, wherein the optical reflector comprises: an LCD.

7. The passive optical tag according to claim 5 or 6, wherein the passive optical tag is a planar structure and the optical reflector is located at a center of the planar structure.

8. An optical read-write device, comprising: an optical receiver, an optical transmitter and a chip, wherein,
the optical receiver is connected to the chip and is configured to receive an optical signal sent by a passive optical tag by reflecting or absorbing light, convert the optical signal into an electrical signal, and send the electrical signal to the chip;
the chip is configured to process the electrical signal, perform a read-write operation on the optical tag, and control the optical transmitter to send continuous light; and
the optical transmitter is connected to the chip and is configured to send the continuous light under control of the chip, modulate the electrical signal sent by the chip into an optical signal and send the optical signal obtained through modulation.

9. The optical read-write device according to claim 8, wherein the optical transmitter comprises: a Light Emitting Diode, LED and a Laser Diode, LD.

10. A passive optical tag system, comprising: a passive optical tag and an optical read-write device, wherein,
the passive optical tag comprises: a first optical receiver, an optical reflector, a first chip and a photovoltaic cell, wherein,
the first optical receiver is connected to the first chip and is configured to receive a first optical signal, convert the first optical signal into a first electrical signal, and send the first electrical signal to the first chip;
the first chip is configured to process the first electrical signal, store tag information; and control the optical reflector to reflect or absorb continuous light sent by the optical read-write device to send a signal to the optical read-write device;
the optical reflector is connected to the first chip and is configured to reflect or absorb the continuous light under control of the first chip; and
the photovoltaic cell is configured to convert light energy into electrical energy and store the electrical energy, and provide the electrical energy to the first optical receiver, the optical reflector and the first chip; and
the optical read-write device comprises a second optical receiver, an optical transmitter and a second chip, wherein,
the second optical receiver is connected to the second chip and is configured to receive a second optical signal, convert the second optical signal into a second electrical signal, and send the second electrical signal to the second chip;
the second chip is configured to process the second electrical signal, perform a read-write operation on the passive optical tag, and control the optical transmitter to send the continuous light; and
the optical transmitter is connected to the second chip and is configured to send the continuous light under control of the second chip, modulate the electrical signal of the second chip into a third optical signal and send the third optical signal.

11. A passive optical tag system, comprising: a passive optical tag and an optical read-write device, wherein,
the passive optical tag comprises: an optical reflector, a first chip and a photovoltaic cell receiver, wherein,
the photovoltaic cell receiver is connected to the first chip and is configured to convert light energy into electrical energy and provide the electrical energy to the first cell and the optical reflector, receive a first optical signal, convert the first optical signal into a first electrical signal and send the first electrical signal to the first chip;
the first chip is configured to process the first electrical signal, store tag information, and control the optical reflector to reflect or absorb continuous light sent by the optical read-write device to send a signal to the optical read-write device; and
the optical reflector is connected to the first chip and is configured to reflect or absorb the continuous light under control of the first chip; and
the optical read-write device comprises: an optical receiver, an optical transmitter and a second chip, wherein,
the optical receiver is connected to the second chip and is configured to receive a second optical signal, convert the second optical signal into a second electrical signal, and send the second electrical signal to the second chip;
the second chip is configured to process the second electrical signal; perform a read-write operation to the passive optical tag; and control the optical transmitter to send the continuous light; and
the optical transmitter is connected to the second chip and is configured to send the continuous light under control of the second chip, modulate a third electrical signal sent by the second chip into a third optical signal and send the third optical signal.

12. An intelligent optical distribution network, comprising: a connection box comprising a plurality of connector ports; and a plurality of cables, wherein, each cable comprises opposite ends and corresponding connectors fixed on each end, and each connector is configured to be detachably fixed in the connector port,
the passive optical tag according to any one of claims 1-7 is set on each connector, wherein each passive optical tag stores tag identification information of the passive optical tag;
the optical read-write device according to claim 8 or 9 is set on each connector port, and each optical read-write device is set on a position enabling the optical read-write device to be directly facing to the passive optical tag on the connector when the connector is inserted into the connector port,;
each optical read-write device is configured to perform a read-write operation on the passive optical tag corresponding to the optical read-write device; each passive optical tag is configured to make a response to the read-write operation of the optical read-write device corresponding to the passive optical tag.

13. The intelligent optical distribution network according to claim 12, wherein each optical read-write device is further configured to communicate with a network management system, receive a message from the network management system and/or send information to the network management system.

14. The intelligent optical distribution network according to claim 13, wherein each optical read-write device is configured to make a response to a request from the network management system, and perform the read-write operation on the passive optical tag corresponding to the optical read-write device.

15. The intelligent optical distribution network according to any one of claims 12-14, wherein the intelligent optical distribution network further comprises:
a management device configured to control various optical read-write devices and report information reported by various optical read-write devices to the network management system.

16. A read-write method of a passive optical tag, comprising:
an optical read-write device sending a first instruction to a passive optical tag, wherein the first instruction is used for enquiring a tag state;
the optical read-write device sending continuous light to the passive optical tag; and
the optical read-write device receiving a first optical signal sent by the passive optical tag by reflecting or absorbing the continuous light after receiving the first instruction, wherein the first optical signal carries a current state of the passive optical tag.

17. The method according to claim 16, wherein the method further comprises:
the optical read-write device sending a second instruction to the passive optical tag, wherein the second instruction is used for enquiring identification information of the passive optical tag;
the optical read-write device sending the continuous light to the passive optical tag; and
the optical read-write device receiving a second optical signal sent by the passive optical tag by reflecting or absorbing the continuous light after receiving the second instruction, wherein the second optical signal carries the identification information.

18. The method according to claim 17, wherein the method further comprises:
the optical read-write device judging whether the identification information is correct; and
when the identification information is incorrect, the optical read-write device giving new identification information to the passive optical tag.

19. The method according to claim 17, wherein the method further comprises:
the optical read-write device judging whether the identification information is blank; and
when the identification information is blank, the optical read-write device giving new identification information to the passive optical tag.

20. The method according to claim 16, wherein the method further comprises:
the optical read-write device sending a third instruction to the passive optical tag, wherein the third instruction is used for giving identification information to the passive optical tag.

21. The method according to any one of claims 16-20, wherein the method further comprises:
the optical read-write device sending a fourth instruction to the passive optical tag, wherein the fourth instruction is used for indicating to end communication;
the optical read-write device sending the continuous light to the passive optical tag; and
the optical read-write device receiving a fourth optical signal sent by the passive optical tag by reflecting or absorbing the continuous light after receiving the fourth instruction, wherein the fourth optical signal carries information agreeing to end.

22. A read-write device of a passive optical tag, comprising:
a first sending module configured to send a first instruction to a passive optical tag, wherein the first instruction is used for enquiring a tag state;
a sending module configured to send continuous light to the passive optical tag; and
a first receiving module configured to receive a first optical signal sent by the passive optical tag by reflecting or absorbing the continuous light after receiving the first instruction, wherein the first optical signal carries a current state of the passive optical tag.

23. The device according to claim 21, wherein the device further comprises:
a second sending module configured to send a second instruction to the passive optical tag, wherein the second instruction is used for enquiring identification information of the passive optical tag;
the sending module further configured to send the continuous light to the passive optical tag after the second sending module sends the second instruction; and
a second receiving module configured to receive a second optical signal sent by the passive optical tag by reflecting or absorbing the continuous light after receiving the second instruction, wherein the second optical signal carries the identification information.

24. The device according to claim 23, wherein the device further comprises:
a first judgment module configured to judge whether the identification information is correct; and
a first giving module configured to, when the identification information is incorrect, give new identification information to the passive optical tag.

25. The device according to claim 23, wherein the device further comprises:
a second judgment module configured to judge whether the identification information is blank; and
a second giving module configured to, when the identification information is blank, give new identification information to the passive optical tag.

26. The device according to claim 22, wherein the device further comprises:
a third sending module configured to send a third instruction to the passive optical tag, wherein the third instruction is used for giving identification information to the passive optical tag.

27. The device according to any one of claims 22-26, wherein the device further comprises:
a fourth sending module configured to send a fourth instruction to the passive optical tag, wherein the fourth instruction is used for indicating to end communication;
the sending module further configured to send the continuous light to the passive optical tag after the fourth sending module sends the fourth instruction; and
a fourth receiving module configured to receive a fourth optical signal sent by the passive optical tag by reflecting or absorbing the continuous light after receiving the fourth instruction, wherein the fourth optical signal carries information agreeing to end.
